# FASCICULE DE BREVET EUROPEEN

(11) **EP 3 439 849 B1**
(45) Date de publication et mention de la délivrance du brevet: **29.04.2020**
(21) Numéro de dépôt: 17720181.1
(22) Date de dépôt: 29.03.2017
(51) Int. Cl.: B29C 49/64, B29C 49/06, B29K 67/00, B29L 31/00

(54) **PROCEDE DE CHAUFFE PREFERENTIELLE D'UN CORPS CREUX COMPORTANT UNE ETAPE DE MARQUAGE**
VERFAHREN ZUR BEVORZUGTEN ERWÄRMUNG EINES HOHLKÖRPERS MIT EINEM MARKIERUNGSSCHRITT
METHOD FOR THE PREFERENTIAL HEATING OF A HOLLOW BODY COMPRISING A MARKING STEP

(30) Priorité: 05.04.2016 FR 1652950
(43) Date de publication de la demande: 13.02.2019
(73) Titulaire: Sidel Participations, 76930 Octeville-sur-Mer (FR)
(72) Inventeur: FEUILLOLEY, Guy, 76930 Octeville-sur-mer (FR); BIANCHINI, Cédric, 76930 Octeville-sur-mer (FR)
(74) Mandataire: Sidel Group
(86) Numéro de dépôt international: PCT/FR2017/050717
(87) Numéro de publication internationale: WO 2017/174898

(56) Documents cités:
- DE-A1- 10 000 859
- FR-A1- 2 703 944
- FR-A1- 3 001 912
- US-A1- 2010 104 697

## Description

### DOMAINE TECHNIQUE DE L'INVENTION

L'invention concerne un procédé de chauffe préférentielle d'un corps creux réalisé en matériau thermoplastique, tel qu'une préforme, le procédé comportant une étape de chauffage du corps creux au-delà d'une température de transition vitreuse par un rayonnement de chauffage, au moins une portion à chauffer du corps creux étant destinée à être chauffée à une première température de chauffage tandis qu'au moins une autre portion à surchauffer du corps creux est destinée à être chauffée au-delà de la première température de chauffage, la portion à surchauffer présentant initialement un coefficient d'absorption du rayonnement sensiblement identique à celui de la portion à chauffer.

### ARRIERE PLAN TECHNIQUE DE L'INVENTION

Les préformes en matériau thermoplastique sont généralement obtenues par moulage par injection dans un moule lors d'une étape initiale de fabrication. Toutefois, il existe d'autres procédés de fabrication de préformes comme par exemple le moulage par compression ou le moulage par injection compression.

Les préformes présentent généralement un corps sensiblement cylindrique de révolution à paroi tubulaire épaisse, qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme, préalablement chauffé, est destiné à subir une déformation relativement importante pour le conformer en récipient lors d'une étape de formage.

Lors d'une étape intermédiaire de chauffage, le corps de la préforme est rendu malléable par chauffage au-delà d'une température de transition vitreuse.

Ensuite, lors de l'étape de formage, la préforme ainsi chauffée est placée dans un moule qui présente une empreinte de moulage conforme au récipient à obtenir. Un fluide sous pression, tel que de l'air, est alors injecté dans le corps malléable de la préforme afin d'en plaquer la paroi contre l'empreinte du moule.

Traditionnellement, le corps de la préforme est chauffé de façon qu'il subisse une expansion qui soit la plus homogène possible dans toutes les directions radiales.

Le moule est généralement maintenu à une température froide relativement à celle de la préforme. Ainsi, lorsque la matière de paroi de la préforme entre en contact avec le moule, elle est refroidie brutalement de manière à être figée dans un état semi-cristallin.

Ce phénomène de refroidissement rend difficile la réalisation de récipients, notamment des bouteilles, présentant une section transversale qui n'est pas approximativement symétrique de révolution par rapport à l'axe du col à partir de la préforme. Ceci entraîne de nombreux inconvénients qui sont cités dans le document FR-A1-2.703.944.

Il s'agit par exemple des récipients de section transversale polygonale dans lesquels chaque face approximativement plane s'écarte sensiblement d'une surface cylindrique enveloppant les arêtes, ou des récipients à corps aplatis tels que les flacons pour produits lessiviels.

On a déjà proposé un procédé, notamment dans ledit document FR-A1-2.703.944, pour obtenir un récipient de section non symétrique de révolution à paroi d'épaisseur homogène obtenu par soufflage ou étirage-soufflage.

Ce document propose notamment de chauffer certaines portions, dites "à surchauffer", du corps de la préforme à une température supérieure à la température de transition vitreuse, sans toutefois atteindre la température de cristallisation du matériau. Les autres portions, dites "à chauffer" de la préforme sont chauffées au-delà de la température de transition vitreuse mais à une température moins importante que les portions à surchauffer.

Un tel procédé, appelé couramment "procédé de chauffe préférentielle", permet de conférer aux portions à surchauffer des caractéristiques mécaniques permettant un étirage, notamment circonférentiel, plus rapide par rapport aux portions à chauffer.

La forme et la répartition des portions à surchauffer et des portions à chauffer définissent un profil de chauffage de la préforme. Le profil de chauffage est adapté en fonction de la forme du récipient final à obtenir.

Lorsque le fluide sous pression est injecté dans le corps de la préforme, les portions surchauffées sont étirées plus rapidement que les portions chauffées sous l'effet de la pression du fluide. Ainsi, à l'instant où les portions surchauffées entrent en contact avec le moule, elles présentent une épaisseur inférieure à celle des portions chauffées. Les portions surchauffées sont alors refroidies et figées dans leur état, permettant d'étirer progressivement le reste du corps de la préforme jusqu'à épouser l'empreinte du moule.

En réglant la température de chaque portion, cela permet d'obtenir un récipient final dont le corps présente une paroi d'épaisseur sensiblement constante.

Bien entendu, pour obtenir un récipient satisfaisant, il est nécessaire d'indexer la position angulaire autour de son axe principal par rapport au moule afin d'orienter correctement les portions surchauffées vers les portions correspondantes de l'empreinte du moule.

Cependant, la mise en œuvre du procédé divulgué dans ce document nécessite un four muni de moyens pour restreindre le chauffage des portions distales. Il s'agit par exemple de boucliers pour protéger les portions à chauffer d'un rayonnement de chauffage, ou encore de moyens pour débrayer temporairement la révolution des préformes. De tels moyens sont très onéreux à fabriquer.

En outre, il est très délicat de procéder au réglage du four pour obtenir des profils de chauffage précis en fonction de la forme du récipient à obtenir.

On a déjà proposé de fabriquer des préformes dont les portions à surchauffer sont revêtues d'une couche de matériau coloré et/ou chargé d'additifs afin d'augmenter le coefficient d'absorption du rayonnement de chauffage de la portion à surchauffer.

Néanmoins, une telle opération de revêtement sélectif de certaines zones est complexe à réaliser.

En outre, pour certaines applications, la présence d'une couche supplémentaire n'est pas souhaitée, par exemple pour des raisons d'hygiène.

De plus, la présence de cette couche, notamment lorsqu'elle est colorée, altère très sensiblement l'apparence du récipient obtenu après formage.

Dans le même ordre d'idée, on a aussi proposé de modifier l'état de surface de la face extérieure des portions de paroi à surchauffer, par exemple en créant mécaniquement un aspect givré ou sablé.

Néanmoins, pour certaines applications, la présence d'une zone rugueuse n'est pas souhaitée, par exemple pour des raisons d'hygiène.

De plus, la présence de cette zone rugueuse altère très sensiblement l'apparence du récipient obtenu après formage.

### BREF RESUMEDE L'INVENTION

L'invention propose un procédé de chauffe préférentielle du type décrit précédemment, caractérisé en ce qu'il comporte successivement :
- une première étape, de marquage d'au moins une portion à surchauffer du corps creux, au cours de laquelle des marques ponctuelles sont réalisées dans l'épaisseur de la paroi de ladite au moins une portion à surchauffer de manière à augmenter le coefficient d'absorption de ladite portion à surchauffer par rapport au coefficient d'absorption de la portion à chauffer ;
- une deuxième étape, de chauffage du corps creux, au cours de laquelle chaque portions à chauffer et chaque portion à surchauffer sont exposées au rayonnement électromagnétique de chauffage.

Selon d'autres caractéristiques du procédé réalisé selon les enseignements de l'invention :
- lors de la première étape de marquage, des marques ponctuelles sont réalisées dans l'épaisseur de la paroi d'au moins une portion à surchauffer à l'exclusion des faces délimitant la paroi ;
- lors de la deuxième étape de chauffage, ladite au moins une portion à chauffer et ladite au moins une portion à surchauffer sont exposées uniformément au rayonnement électromagnétique de chauffage ;
- la densité de marques ponctuelles sur chaque partie élémentaire d'une portion à surchauffer est déterminée en fonction de la température de chauffage à atteindre à l'issue de la deuxième étape de chauffage pour ladite partie élémentaire ;
- chaque marque ponctuelle est réalisée par modification ponctuelle de l'opacité au rayonnement du matériau constituant la paroi en matériau thermoplastique du corps creux ;
- chaque marque ponctuelle est réalisée au moyen d'un laser émettant un faisceau laser ;
- chaque marque ponctuelle est réalisée par échauffement local du matériau dans l'épaisseur de la paroi au moyen du laser ;
- le matériau thermoplastique est formé par du "PET" et en ce que le faisceau laser présente une longueur d'onde comprise entre 400 nm et 3000 nm ;
- le faisceau laser présente une longueur d'onde comprise dans l'infrarouge court, notamment 1064 nm ;
- le laser émet un faisceau laser par impulsions comprises entre 10⁻¹⁰ et 10⁻⁷ secondes, notamment de l'ordre de la nanoseconde ;
- le laser est réglé pour qu'un point focal du faisceau laser émis soit agencé à une distance des faces délimitant la paroi à marquer qui est supérieure à un seuil déterminé en deçà duquel la face de la paroi est endommagée ;
- le point focal du faisceau laser est localisé dans l'épaisseur de la paroi à marquer ;
- le point focal du faisceau laser est localisé à l'extérieur de la paroi à marquer ;
- le procédé comporte une troisième étape, d'asservissement des moyens de marquage, au cours de laquelle la température de d'au moins une portion à surchauffer est déterminée, puis elle est comparée à une température de consigne, la densité des marques ponctuelles étant modifiée dans la première étape de marquage de manière à s'approcher de la température de consigne pour les préformes suivantes.

L'invention concerne aussi une préforme marquée obtenue selon la première étape de marquage du procédé réalisé selon les enseignements de l'invention, la préforme étant réalisée par moulage d'un unique matériau thermoplastique, caractérisée en ce que la paroi de la préforme comporte au moins une portion à surchauffer comportant, dans l'épaisseur de la paroi en matériau thermoplastique, des marques ponctuelles formées par opacification locale du matériau thermoplastique.

Selon d'autres caractéristiques de la préforme marquée :
- les marques ponctuelles sont distribuées dans au moins une portion à surchauffer selon des motifs organisés ;
- au moins une portion de paroi à surchauffer présente un état de surface similaire aux autres portions de paroi à chauffer ;
- la préforme est réalisée en polyéthylène téréphtalate.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une installation de fabrication de récipients marqués pour mettre en œuvre le procédé selon l'invention ;
- la figure 2 est une vue de dessus qui représente une station de marquage de l'installation de la figure 1 ;
- la figure 3 est une vue en perspective qui représente une préforme avant son marquage ;
- la figure 4 est une vue en coupe axiale d'une portion de la paroi du corps de la préforme de la figure 3 pendant son marquage ;
- la figure 5 est une vue de profil d'une préforme marquée selon un premier profil de chauffe préférentielle ;
- la figure 6 est une vue de profil d'une préforme marquée selon un second profil de chauffe préférentielle ;
- la figure 7 est une vue en développé d'une portion marquée de la paroi d'une préforme vue orthogonalement à la face externe de ladite paroi, les marques étant distribuées selon un premier motif organisé ;
- la figure 8 est une vue similaire à celle de la figure 7 qui représente les marques organisées selon un deuxième motif organisé ;
- la figure 9 est une vue similaire à celle de la figure 7 qui représente les marques organisées selon un troisième motif organisé ;
- la figure 10 est une vue similaire à celle de la figure 7 qui représente les marques organisées selon un quatrième motif organisé ;
- la figure 11 est un schéma-blocs qui représente les différentes étapes du procédé de chauffe préférentielle réalisé selon les enseignements de l'invention.

### DESCRIPTION DETAILLEE DES FIGURES

Dans la suite de la description, des éléments présentant une structure identique ou des fonctions analogues seront désignés par un même numéro de référence.

Dans la suite de la description, on adoptera à titre non limitatif des orientations :
- longitudinale dirigée d'arrière en avant et désignée par la flèche "L" des figures ;
- verticale dirigée de bas en haut et désignée par la flèche "V" des figures ;
- transversale dirigée de gauche à droite et désignée par la flèche "T" des figures.

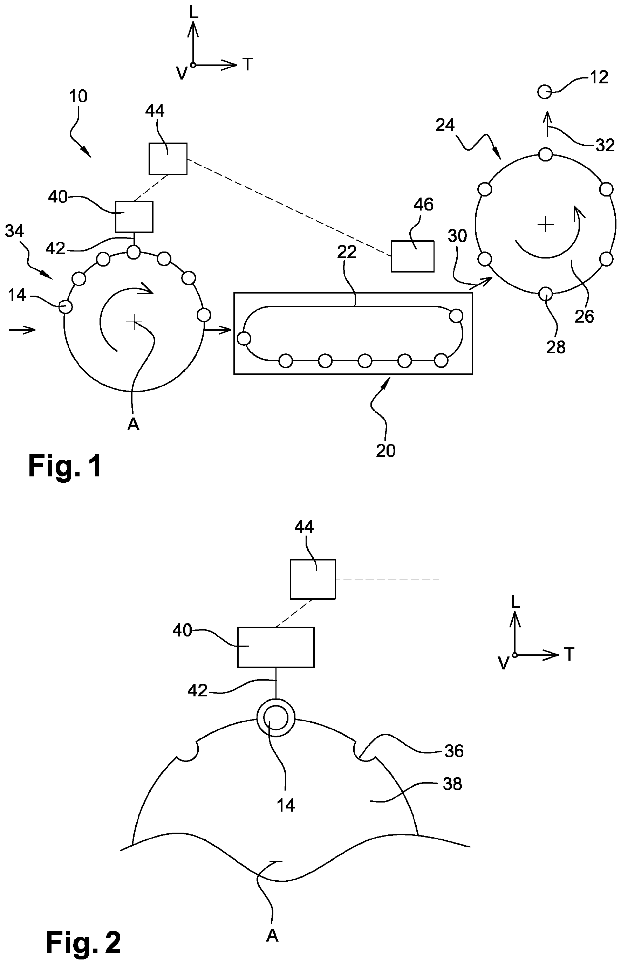

On a représenté schématiquement à la figure 1 une installation 10 de fabrication en série de récipients 12 en matériau thermoplastique. De manière non limitative, les récipients 12 sont ici des bouteilles. Le matériau thermoplastique est ici formé par du polyéthylène téréphtalate, désigné par la suite sous son acronyme "PET".

Dans la suite de la description et dans les revendications, les préformes 14 et les récipients 12 seront désignés de manière générique par le terme "corps creux".

Les récipients 12 sont obtenus par formage à chaud de préformes 14 en matériau thermoplastique.

Par la suite, le terme "préforme 14" sera utilisé pour désigner le récipient avant l'étape de formage.

De telles préformes 14 sont obtenues généralement par moulage par injection. L'invention porte aussi sur des préformes obtenues par d'autre procédés de moulage tels que le moulage par compression ou le moulage par injection compression.

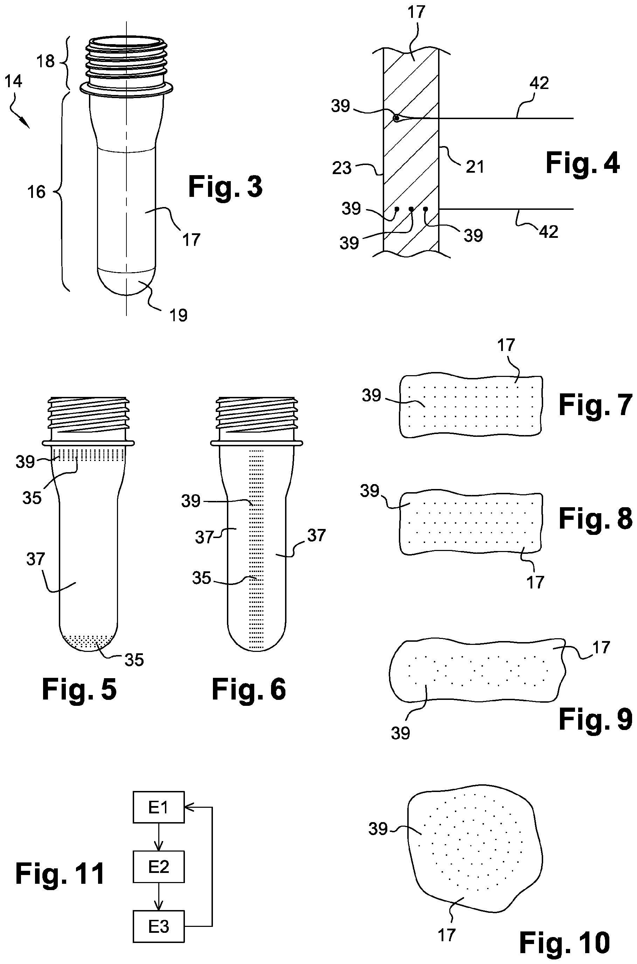

Comme représenté à la figure 3, elles présentent un corps 16 cylindrique à paroi 17 tubulaire, fermé à l'une de ses extrémités axiales par un fond 19, et qui est prolongé à son autre extrémité par un col 18, lui aussi tubulaire. La paroi 17 est délimitée par une face 21 externe et par une face 23 interne comme cela est illustré à la figure 4. Le col 18 est généralement injecté de manière à posséder déjà sa forme définitive tandis que le corps 16 de la préforme 14 est destiné à subir une déformation relativement importante pour former le récipient 12 final lors d'une étape de formage. Les préformes 14 sont ici réalisées venues de matière en PET, c'est-à-dire que la préforme 14 est réalisée par moulage d'un unique matériau thermoplastique de composition déterminée.

En se reportant à la figure 1, l'installation 10 comporte une station 20 de chauffage des préformes 14. A titre d'exemple non limitatif, la station 20 de chauffage est formée par un tunnel dans lequel sont agencés des moyens (non représentés) de chauffage émettant un rayonnement électromagnétique de chauffage.

Les moyens de chauffage sont par exemple formés par des émetteurs de rayonnement électromagnétique chauffants tels que des lampes à infrarouge émettant un rayonnement infrarouge.

Un moyen 22 de convoyage des préformes 14 est agencé de manière à faire défiler les préformes 14 le long des moyens de chauffage depuis une entrée jusqu'à une sortie du tunnel. Le sens de défilement des corps creux est indiqué par les flèches de la figure 1.

En variante, la station de chauffage est formée de cavités individuelles équipées de moyens de chauffage et recevant chacune une préforme.

A leur sortie de la station 20 de chauffage, la partie à déformer des préformes 14, généralement le corps 16, est rendue malléable par chauffage au-delà d'une température de transition vitreuse, tandis que les parties à ne pas déformer, en général le col 18, sont maintenues à une température suffisamment basse pour conserver leur forme d'origine.

L'installation 10 comporte aussi une station 24 de formage des préformes 14 ainsi chauffées. La station 24 de formage est agencée en aval de la station 20 de chauffage en référence au flux de préformes 14 dans l'installation 10.

La station 24 de formage présente ici la forme d'un carrousel 26 portant une pluralité de postes 28 de formage. Chaque poste 28 de formage est ainsi susceptible de se déplacer autour de l'axe du carrousel 26 entre un point 30 de chargement des préformes 14 chaudes et un point 32 de déchargement des récipients 12 finaux avant de reprendre un nouveau cycle.

Il s'agit ici de postes 28 de formage par étirage-soufflage des préformes 14, connus en soi et qui ne seront donc pas illustrés plus en détails.

A cet effet, chaque poste 28 de formage comporte un moule (non représenté) amovible qui délimite une cavité de moulage. La cavité de moulage est destinée à recevoir une préforme 14 sortant encore chaude de la station 20 de chauffage. Chaque poste 28 de formage comporte aussi une tuyère (non représentée) associée de soufflage ou d'étirage-soufflage qui est destinée à conférer au récipient 12 sa forme définitive en plaquant la paroi 17, rendue malléable par les moyens de chauffage, de la préforme 14 contre les parois de la cavité de moulage par injection d'un fluide sous pression par le col 18 de la préforme 14. La paroi 17 malléable de la préforme 14 subit ainsi un étirage qui diminue son épaisseur.

S'agissant de postes 28 de formage par soufflage, le fluide est généralement formé par un gaz sous pression.

On comprendra cependant que l'invention est aussi applicable à d'autres types de postes de formage, notamment à des postes de formage par injection d'un liquide sous pression dans la préforme.

Lors de l'étape de formage des récipients 12, le carrousel 26 est animé d'un mouvement de rotation pour permettre le déplacement des préformes 14 chaudes depuis le point 30 de chargement jusqu'au point 32 de déchargement des récipients 12 formés. Ainsi, une nouvelle préforme 14 peut débuter l'étape de formage tandis que la préforme 14 précédente n'a pas encore achevé son cycle de formage. Ceci permet de maintenir un rythme élevé pour la fabrication en grande série des récipients 12.

L'installation 10 comporte aussi une station 34 de marquage des préformes 14. La station 34 de marquage est agencée en amont de la station 20 de chauffage en référence au flux des préformes 14 indiqué par les flèches de la figure 1, de manière que les préformes 14 soient chauffées après leur marquage.

En variante, la station de marquage est agencée en aval du dispositif de moulage des préformes.

Selon une autre variante, la station de marquage est intégrée à la station de chauffage. En ce cas, la station de marquage prend par exemple la place d'un moyen de chauffage à l'entrée de la station de chauffage, ou encore la station de marquage est agencée dans une zone dénuée de moyen de chauffage dans le tunnel, par exemple au niveau d'un virage du tunnel de chauffage.

Cette station 34 de marquage a pour fonction d'augmenter le coefficient d'absorption de certaines portions 35 à surchauffer du corps 16 de la préforme 14. Ces portions 35 à surchauffer comportent des marques 39 ponctuelles qui permettent d'augmenter le coefficient d'absorption du rayonnement de chauffage par rapport à celui des portions 37 à chauffer qui sont dénuées desdites marques 39 ponctuelles.

Comme illustré à la figure 2, la station 34 de marquage comporte un organe 36 de support pour préforme 14, il s'agit par exemple d'encoches situés en périphérie d'une roue 38 de transfert montée rotative autour d'un axe "A" vertical.

En variante non représentée, l'organe de support pour préforme est formé par une pince ou encore par un mandrin sur lequel vient s'emboîter le col de la préforme mise en rotation en périphérie de la roue de transfert.

La station 34 de marquage comporte en outre des moyens paramétrables pour marquer la paroi 17 de la préforme 14. Ces moyens permettent ainsi d'inscrire des marques 39 ponctuelles dans l'épaisseur de la paroi 17 de la préforme 14, comme cela est représenté à la figure 4.

De préférence, les marques 39 ponctuelles sont formées entre la face 21 externe et la face 23 interne, à l'exclusion de ladite face 21 externe et de ladite face 23 interne.

S'agissant de préformes 14 réalisées en un matériau thermoplastique transparent ou tout au moins translucide, les moyens de marquage permettent ici de modifier localement l'opacité au rayonnement de chauffage du matériau constituant la paroi 17 en matériau thermoplastique de la préforme 14. Ceci permet d'augmenter le coefficient d'absorption de portions 35 à surchauffer de la préforme 14.

De préférence, les moyens de marquage n'enlèvent pas de matière à la paroi 17 de la préforme 14. De plus la face 21 externe et la face 23 interne de la paroi 17 sont laissées inchangées par l'étape de marquage de la paroi 17. Ainsi, la paroi 17 du récipient 12 obtenu après formage présente une épaisseur homogène, y compris dans la zone marquée. La paroi 17 du récipient 12 est ainsi aussi résistante à la rupture dans sa partie marquée que dans ses parties non marquées. De plus, cela permet de marquer des préformes 14 destinées à devenir des récipients 12 à paroi 17 très fine.

Dans l'exemple représenté aux figures 1 et 2, les moyens de marquage comportent un laser 40. Il s'agit plus particulièrement d'un laser 40 qui est susceptible d'émettre un faisceau 42 laser. Le faisceau 42 est émis sensiblement orthogonalement à la face 21 externe de la paroi 17.

Le faisceau 42 présente une puissance inférieure à un seuil d'ablation au-delà duquel le laser 40 commence à creuser la paroi 17. En tous les cas, il est préférable que le laser 40 soit réglé de manière que la puissance instantanée du faisceau 42 émis ne dépasse pas le seuil d'ablation afin d'éviter que la paroi 17 ne soit gravée.

Le laser 40 émet plus particulièrement un faisceau 42 par impulsions comprises entre 10⁻¹⁰ et 10⁻⁷ secondes. Chaque impulsion de faisceau 42 dure ainsi de l'ordre de la nanoseconde.

On a en effet constaté qu'en application à une préforme 14 réalisée en PET, un faisceau 42 émis par impulsions durant plus de 1 microseconde entrainait un échauffement trop important du matériau thermoplastique provoquant la destruction du matériau. On a aussi constaté qu'en application à une préforme 14 réalisée en PET, un faisceau 42 émis par impulsions de l'ordre du femtoseconde ne permettait pas d'obtenir un marquage suffisant pour augmenter le coefficient d'absorption du rayonnement de chauffage par la paroi 17 de la préforme 14.

Le laser 40 est de préférence sélectionné de manière à émettre un faisceau 42 dont le rayonnement soit faiblement absorbé par le matériau formant la préforme 14 de façon à déposer peu d'énergie au niveau de la face 21 externe ou de la face 23 interne de la paroi 17. Un tel laser 40 est sélectionné en fonction de la longueur d'onde du faisceau 42. En effet, si l'énergie du faisceau 42 était absorbée en surface de la paroi, la face 21 externe de la paroi 17 serait endommagée. Ce paramètre est aisément déterminé par l'homme du métier lors d'essais.

Par exemple, pour une paroi 17 réalisée en PET, on a constaté que le faisceau 42 présente avantageusement une longueur d'onde comprise entre 400 nm et 3000 nm, par exemple 532 nm ou 1064 nm.

Par ailleurs, de manière connue, un faisceau 42 laser ne se présente pas une forme parfaitement cylindrique tout au long de son trajet. Le faisceau 42 laser converge tout d'abord jusqu'à un point appelé point focal, puis le faisceau 42 laser poursuit son trajet en divergent depuis le point focal. Ainsi, le point focal est déterminé comme étant le point auquel le faisceau 42 présente sa plus petite section.

On a constaté que pour produire des marques 39 ponctuelles dans l'épaisseur de la paroi 17 sans endommager sa face 21 externe ni sa face 23 interne, le point focal est de préférence agencé à une distance supérieure à un seuil déterminé de ladite face 21 externe et de ladite face 23 interne. Le seuil est par exemple déterminé par des tests. Ce seuil est très faible, il est par exemple inférieur à la demi-épaisseur de la paroi 17. Ainsi, pour produire des marques 39 ponctuelles sans endommager la face 21 externe et la face 23 interne de la paroi 17, le point focal peut être localisé soit à l'intérieur de la paroi 17, soit à l'extérieur de la paroi 17.

Pour régler précisément la position du point focal, on utilise par exemple une lentille de défocalisation qui est interposée sur le trajet du faisceau 42 entre le laser 40 et la préforme 14.

Plusieurs types de laser peuvent être sélectionnés pour satisfaire à ces conditions.

A titre d'exemple non limitatif, il s'agit ici d'un laser 40 au grenat d'yttrium-aluminium dopé au néodyme, plus connu sous la dénomination "laser Nd-YAG". Un tel laser 40 émet typiquement un faisceau 42 dans la gamme des infrarouges courts, notamment d'une longueur d'onde de 1064 nm. Un exemple d'un tel laser 40 est notamment commercialisé par la société "TRUMPF" sous l'appellation "TruMark 6000".

Selon d'autres exemples non limitatifs, on pourra aussi utiliser un laser de type yttrium ortho-vanadate dopé au néodyme, aussi connu sous l'appellation "laser Nd-YVO₄", ou encore un laser de type ytterbium fiber, aussi connu sous l'appellation "laser Yb:fiber".

On a constaté que les zones de paroi 17 en matériau thermoplastique visées par le faisceau 42 laser présentent dans leur épaisseur l'apparition d'au moins une marque 39 ponctuelle sur le trajet du faisceau 42 laser, comme cela est représenté par le faisceau 42 du haut à la figure 4.

En variante, un chapelet de plusieurs marques 39 ponctuelles est susceptible d'être formé dans l'épaisseur de la paroi 17 sur le trajet du faisceau 42 laser, comme cela est représenté par le faisceau 42 du bas de la figure 4.

Les deux faisceaux 42 laser de la figure 4 sont ici orientés sensiblement orthogonalement à la face 21 externe de la paroi 17.

Chaque marque 39 ponctuelle est formée par une élévation locale de la température dans le matériau thermoplastique sous l'effet du faisceau 42 laser. Chaque marque 39 ponctuelle est ainsi réalisée dans la masse, à partir du matériau constituant la préforme 14. Bien que le phénomène ne soit pas totalement expliqué, on a constaté que cette élévation locale de température entraîne une modification des propriétés chimique et/ou de structure du matériau se traduisant par une modification des propriétés optiques du matériau localisé à cette marque 39 ponctuelle. Plus particulièrement cette marque 39 ponctuelle présente une plus grande opacité au rayonnement de chauffage que le matériau thermoplastique non modifié par le faisceau 42.

Une telle marque 39 ponctuelle peut aisément être distinguée d'une particule issue d'un additif ajouté au matériau thermoplastique avant le moulage de la préforme 14.

A titre d'exemple non limitatif, si l'élévation de température est suffisante, on peut observer l'apparition de particules carbonées dans la marque 39 ponctuelle issues du chauffage du matériau thermoplastique formant la paroi 17.

Néanmoins, la marque 39 ponctuelle peut présenter une opacité supérieure sans contenir de particules carbonées.

Le laser 40 comporte des moyens (non représentés) commandés pour déplacer le faisceau 42 émis dans un champ déterminé de marquage, par exemple au moyen de lentilles et/ou de miroirs mobiles par rapport aux organes 36 de support. Ainsi, l'organe 36 de support permet d'acheminer la préforme 14 dans une position de marquage située dans le champ de marquage du laser 40. La préforme 14 est alors immobilisée ou mise en rotation autour de son axe, de manière continue ou discontinue, le temps que le faisceau 42 laser trace les marques 39 ponctuelles dans la paroi 17 immobile en se déplaçant. Le déplacement du faisceau 42 laser est ainsi commandé à la manière d'un crayon pour produire les marques 39 ponctuelles dans la paroi 17 de la préforme 14.

Les moyens de commande du déplacement du faisceau laser sont formés par une unité 44 électronique de commande qui est susceptible d'être paramétrée à volonté pour modifier la distribution des marques 39 ponctuelles et les portions 35 de paroi 17 à surchauffer, il s'agit par exemple d'une commande numérique. Les paramètres à modifier concernent par exemple les coordonnées du déplacement du faisceau 42, la vitesse de déplacement du faisceau 42, etc.

En variante non représentée, les récipients ne sont pas immobilisés. Le laser est alors commandé en tenant compte du déplacement de la préforme. En ce cas, le marquage effectué est dit "cartésien", c'est-à-dire que le laser effectue un balayage uniquement vertical par rapport à un repère fixe tandis que la préforme défile horizontalement par rapport audit repère fixe et, ainsi, les deux axes vertical et horizontal sont couverts par le faisceau laser. Cette variante est particulièrement adaptée pour surchauffer des portions 35 de petite taille en un temps relativement court par rapport à la vitesse de défilement des préformes devant le laser.

Selon une autre variante non représentée de l'invention, un laser est associé à chaque encoche de la roue de manière à marquer individuellement chaque préforme chargée sur l'encoche associée. Ainsi chaque laser accompagne la rotation de la roue pour permettre un marquage en continu sans ralentir le flux des préformes.

En variante non représentée, le marquage est effectué par projection d'un faisceau laser large à travers un masque ou par projection d'un faisceau laser via un moyen de mise en forme du faisceau telle qu'une optique diffractive.

Les portions 35 à surchauffer peuvent être situées à tout endroit de la préforme 14.

Ainsi, selon un premier exemple représenté à la figure 5, une première portion 35 à surchauffer est formée par un tronçon d'extrémité supérieur du corps qui est agencé directement au-dessous du col 18. Il est en effet connu que cette zone est difficile à chauffer du fait de sa proximité avec le col 18, qui doit demeurer à une température inférieure à la température de transition vitreuse afin de ne pas déformer la zone sous col 18.

La préforme 14 présente aussi une deuxième portion 35 à surchauffer qui est formée par le fond 19 de la préforme. Il est en effet courant que cette portion de préforme soit difficile à chauffer correctement du fait de la forme hémisphérique du fond 19 qui est moins bien exposé au rayonnement chauffant que le reste du corps 16 cylindrique de la préforme.

Selon un deuxième exemple représenté à la figure 6, la préforme 14 présente une portion 35 à surchauffer qui s'étend sur une bande axiale du corps 16 de la préforme 14. Il s'agit ici d'une préforme 14 qui est destinée à être conformée en un récipient non axisymétrique.

Bien entendu, il est possible de répartir les portions 35 à surchauffer librement de manière adaptée à chaque situation.

La densité des marques 39 ponctuelles sur chaque partie élémentaire de portion 35 à surchauffer est déterminée en fonction de la température de chauffage que l'on souhaite atteindre sur ladite partie élémentaire. Plus la densité de marques 39 ponctuelles sera élevée sur une zone de paroi 17 déterminée, plus le coefficient d'absorption du rayonnement de chauffage sera élevé. Lorsque le corps 16 de la préforme 14 est soumis au rayonnement de chauffage, la température de ladite zone de paroi 17 augmentera donc plus rapidement que les zones de paroi 17 présentant une densité de marquage inférieure voire nulle.

Dans les exemples représentés aux figures 5 et 6, la densité de marques 39 ponctuelles est homogène sur toute la portion 35 à surchauffer.

En variante, la densité de marques 39 ponctuelles est susceptible de varier selon une distribution déterminée sur toute l'étendue de la portion 35 à surchauffer. C'est notamment le cas lorsqu'on souhaite que la température de la portion 35 à surchauffer ne soit pas homogène.

Chaque marque 39 ponctuelle est formée individuellement par le faisceau 42 laser. De ce fait, les marques 39 ponctuelles sont susceptibles d'être distribuées selon des motifs organisés.

Ainsi, on a représenté à la figure 7 un développé de la paroi 17 vue orthogonalement à la face 21 externe. Les marques 39 ponctuelles sont ici réparties selon un motif matriciel dans lequel les marques 39 ponctuelles sont réparties par rangées horizontales et par colonnes verticales.

Selon un deuxième exemple de motif représenté à la figure 8, les marques 39 ponctuelles sont réparties en quinconce.

Selon un troisième exemple de motif représenté à la figure 9, les marques 39 ponctuelles sont réparties selon une suite de formes géométriques. Les marques 39 ponctuelles sont ici réparties sur des périmètres de cercles successifs.

Selon un quatrième exemple de motif représenté à la figure 10, les marques 39 ponctuelles sont réparties en formes géométriques concentriques, ici des cercles.

Bien entendu, d'autres distributions organisées de motifs sont possibles.

En variante non représentée, on pourra bien entendu distribuer les marques ponctuelles selon un motif reproduisant artificiellement une répartition aléatoire.

L'installation 10 ainsi décrite est mise en œuvre par un procédé de chauffe préférentielle d'un corps creux réalisé en matériau thermoplastique, tel qu'une préforme 14.

La préforme 14 est destiné à être chauffée selon un profil de chauffe préférentiel. Ainsi au moins une portion 37 à chauffer du corps 16 de la préforme 14 est destinée à être chauffée à une première température de chauffage supérieure à la température de transition vitreuse. Au moins une autre portion 35 à surchauffer du corps 16 de la préforme 14 est destinée à être chauffée au-delà de la première température de chauffage. Initialement, le corps 16 de la préforme présente un coefficient d'absorption homogène. En d'autres termes, la portion 35 à surchauffer présente initialement un coefficient d'absorption du rayonnement de chauffage sensiblement égal au coefficient d'absorption de la portion 37 à chauffer

En référence à la figure 1, le procédé comporte une première étape "E1" de marquage de portions 35 à surchauffer de la préforme 14 au cours de laquelle des marques 39 ponctuelles sont réalisées dans l'épaisseur de la paroi 17 de la portion 35 à surchauffer, à l'exclusion des faces délimitant la paroi, de manière à augmenter le coefficient d'absorption de ladite portion 35 à surchauffer par rapport au coefficient d'absorption de la portion 37 à chauffer.

La face 21 externe et la face 23 interne des portions 35 à surchauffer du corps 16 de la préforme 14 ainsi marquée présentent un état de surface sensiblement identique à celui de la face 21 externe et de la face 23 interne des portions 37 à chauffer.

Le procédé comporte ensuite une deuxième étape "E2" de chauffage de la préforme 14 marquée, au-delà d'une température de transition vitreuse. A cet effet, la préforme 14 marquée est introduite dans la station 20 de chauffage. Le corps 16 de la préforme 14 est exposé uniformément au rayonnement de chauffage. Ainsi, les portions 35 à surchauffer sont exposées à la même quantité de rayonnement de chauffage que les portions 37 à chauffer. Du fait de la présence des marques 39 ponctuelles selon une densité déterminée, la température des portions 35 à surchauffer s'élève plus rapidement que la température des portions 37 à chauffer. A la sortie de la station 20 de chauffage, le corps 16 de la préforme 14 est ainsi chauffé de manière hétérogène, selon un profil de chauffe déterminé, malgré l'exposition circonférentielle uniforme du corps 16 au rayonnement de chauffage.

En variante, on prévoit que l'étape de chauffage est une étape de chauffage préférentielle qui privilégie le chauffage des zones à surchauffer. Le marquage permet alors d'amplifier l'effet de chauffage préférentiel.

Dans une autre variante, applicable à la fabrication de récipients non axisymétriques (flacons par exemple), on prévoit que le marquage est appliqué à des zones difficiles à traiter par une chauffe préférentielle traditionnelle, telle que celle décrite dans FR-A1-2.703.944, en particulier la zone sous col ou la zone de fond, et on fait subir une étape de chauffage préférentielle traditionnelle sur d'autres zones du corps.

Optionnellement, le procédé de chauffe préférentielle du corps 16 de la préforme 14 comporte une troisième étape "E3", d'asservissement des moyens de marquage, qui intervient à la sortie de la station 20 de chauffage. Au cours de cette troisième étape "E3" d'asservissement, la température de la portion 35 à surchauffer est déterminée, par exemple au moyen d'un capteur 46 de température sans contact qui est agencé à la sortie de la station 20 de chauffage. La température mesurée par le capteur 46 est ensuite transmise à une unité 44 électronique de commande qui la compare à une température de consigne. Si la température mesurée diffère de la température de consigne, l'unité 44 électronique de commande donne l'ordre au laser 40 de modifier la densité des marques 39 ponctuelles dans la première étape "E1" de marquage de manière à s'approcher de la température de consigne pour les préformes 14 suivantes.

La préforme 14 ainsi chauffée est ensuite envoyée à la station 24 de formage pour être conformée en récipient. Généralement, les marques 39 ponctuelles sont visibles à l'œil nu sur les préformes 14 après leur marquage. En revanche, ces marques 39 ponctuelles deviennent presque imperceptibles à l'œil nu après l'opération de formage. L'étirage que subit la paroi 17 diminue en effet la densité surfacique des marques 39 ponctuelles.

De plus, les marques 39 ponctuelles étant formées dans la masse par chauffage du matériau thermoplastique, elles sont étirées en même temps que la paroi 17, rendant leur aspect moins opaque.

Le procédé de chauffe préférentielle réalisé selon les enseignements de l'invention permet d'augmenter aisément le coefficient d'absorption de certaines portions de paroi d'une préforme standard. Ainsi, il n'est plus nécessaire de prévoir la fabrication de préformes limitées à une application particulière dès l'opération de moulage de la préforme.

En outre, le dispositif de marquage permet de modifier aisément la configuration des portions de préforme à surchauffer, par exemple lorsque le fabricant de récipient souhaite changer la forme des récipients à former.

De plus, il est particulièrement aisé d'asservir la station de marquage en fonction de la température mesurée sur les préformes 14 sortant de la station 20 de chauffage. Ceci permet de limiter le nombre de préformes à jeter en cas de non-conformité.

## Revendications

1. Procédé de chauffe préférentielle d'un corps creux réalisé en matériau thermoplastique, tel qu'une préforme (14) de récipient, le procédé comportant une étape (E2) de chauffage du corps creux au-delà d'une température de transition vitreuse par un rayonnement de chauffage, au moins une portion (37) à chauffer du corps creux étant destinée à être chauffée à une première température de chauffage tandis qu'au moins une autre portion (35) à surchauffer du corps creux est destinée à être chauffée au-delà de la première température de chauffage, la portion (35) à surchauffer présentant initialement un coefficient d'absorption du rayonnement sensiblement identique à celui de la portion (37) à chauffer ;
**caractérisé en ce qu'**il comporte successivement :
- une première étape (E1), de marquage d'au moins une portion (35) à surchauffer du corps creux, au cours de laquelle des marques (39) ponctuelles sont réalisées dans l'épaisseur de la paroi (17) de ladite portion (35) à surchauffer de manière à augmenter le coefficient d'absorption de ladite portion (35) à surchauffer par rapport au coefficient d'absorption de la portion (37) à chauffer ;
- une deuxième étape (E2), de chauffage du corps creux, au cours de laquelle chaque portion (37) à chauffer et chaque portion (35) à surchauffer sont exposées au rayonnement électromagnétique de chauffage.

2. Procédé selon la revendication précédente, **caractérisé en ce que** lors de la première étape (E1) de marquage, des marques (39) ponctuelles sont réalisées dans l'épaisseur de la paroi (17) d'au moins une portion (35) à surchauffer à l'exclusion des faces (21, 23) délimitant la paroi (17).

3. Procédé selon l'une quelconque des revendications précédentes, **caractérisé en ce que** lors de la deuxième étape (E2) de chauffage, ladite au moins une portion (37) à chauffer et ladite au moins une portion (35) à surchauffer sont exposées uniformément au rayonnement électromagnétique de chauffage.

4. Procédé selon l'une quelconque des revendications précédentes, **caractérisé en ce que** la densité de marques (39) ponctuelles sur chaque partie élémentaire d'une portion (35) à surchauffer est déterminée en fonction de la température de chauffage à atteindre à l'issue de la deuxième étape (E2) de chauffage pour ladite partie élémentaire.

5. Procédé selon la revendication précédente, **caractérisé en ce que** chaque marque (39) ponctuelle est réalisée par modification ponctuelle de l'opacité au rayonnement du matériau constituant la paroi (17) en matériau thermoplastique du corps creux.

6. Procédé selon la revendication précédente, **caractérisé en ce que** chaque marque (39) ponctuelle est réalisée au moyen d'un laser (40) émettant un faisceau (42) laser.

7. Procédé selon la revendication précédente, **caractérisé en ce que** chaque marque (39) ponctuelle est réalisée par échauffement local du matériau dans l'épaisseur de la paroi (17) au moyen du laser (40).

8. Procédé selon la revendication précédente, **caractérisé en ce que** le matériau thermoplastique est formé par du "PET" et **en ce que** le faisceau (42) laser présente une longueur d'onde comprise entre 400 nm et 3000 nm.

9. Procédé selon la revendication précédente, **caractérisé en ce que** le faisceau (42) laser présente une longueur d'onde comprise dans l'infrarouge court, notamment 1064 nm.

10. Procédé selon l'une quelconque des revendications 6 à 9, **caractérisé en ce que** le laser (40) émet un faisceau (42) laser par impulsions comprises entre 10⁻¹⁰ et 10⁻⁷ secondes, notamment de l'ordre de la nanoseconde.

11. Procédé selon l'une quelconque des revendications 6 à 10, **caractérisé en ce que** le laser (40) est réglé pour qu'un point focal du faisceau (42) laser émis soit agencé à une distance des faces (21, 23) délimitant la paroi (17) à marquer qui est supérieure à un seuil déterminé en deçà duquel la face (21, 23) de la paroi est endommagée.

12. Procédé selon la revendication précédente, **caractérisé en ce que** le point focal du faisceau (42) laser est localisé dans l'épaisseur de la paroi (17) à marquer.

13. Procédé selon la revendication 10, **caractérisé en ce que** le point focal du faisceau (42) laser est localisé à l'extérieur de la paroi (17) à marquer.

14. Procédé selon l'une quelconque des revendications 4 à 13, **caractérisé en ce qu'**il comporte une troisième étape (E3) d'asservissement des moyens de marquage au cours de laquelle la température d'au moins une portion (35) à surchauffer est déterminée, puis elle est comparée à une température de consigne, la densité des marques (39) ponctuelles étant modifiée dans la première étape (E1) de marquage de manière à s'approcher de la température de consigne pour les préformes (14) suivantes.

15. Préforme (14) marquée obtenue à l'issue de la première étape du procédé réalisé selon l'une quelconque des revendications précédente, la préforme (14) étant réalisée par moulage d'un unique matériau thermoplastique, **caractérisée en ce que** la paroi (17) de la préforme (14) comporte au moins une portion (35) à surchauffer comportant, dans l'épaisseur de la paroi (17) en matériau thermoplastique, des marques (39) ponctuelles formées par opacification locale du matériau thermoplastique.

16. Préforme (14) selon la revendication précédente, **caractérisé en ce que** les marques (39) ponctuelles sont distribuées dans au moins une portion (35) à surchauffer selon des motifs organisés.

17. Préforme (14) selon la revendication précédente, **caractérisée en ce que** au moins une portion (35) de paroi à surchauffer présente un état de surface similaire aux autres portions (37) de paroi à chauffer.

18. Préforme (14) selon l'une quelconque des revendications 15 à 17, **caractérisée en ce qu'**elle est réalisée en polyéthylène téréphtalate.

## Patentansprüche

1. Verfahren zum bevorzugten Erwärmen eines Hohlkörpers aus einem thermoplastischen Material wie ein Behälter-Vorformling (14), wobei das Verfahren einen Schritt (E2) des Erwärmens des Hohlkörpers über eine Glasübergangstemperatur hinaus durch eine Heizstrahlung umfasst, wobei mindestens ein zu erwärmender Abschnitt (37) des Hohlkörpers dazu bestimmt ist, auf eine erste Erwärmungstemperatur erwärmt zu werden, während mindestens ein anderer überzuerwärmender Abschnitt (35) dazu bestimmt ist, über die erste Erwärmungstemperatur hinaus erwärmt zu werden, wobei der überzuerwärmende Abschnitt (35) anfänglich im Wesentlichen den gleichen Strahlungsabsorptionskoeffizienten wie der zu erwärmende Abschnitt (37) aufweist;
**dadurch gekennzeichnet, dass** es nacheinander umfasst:
- einen ersten Schritt (E1) des Markierens mindestens eines überzuerwärmenden Abschnitts (35) des Hohlkörpers, in dessen Verlauf punktförmige Markierungen (39) in der Dicke der Wand (17) des überzuerwärmenden Abschnitts (35) ausgeführt werden, so dass der Absorptionskoeffizient des überzuerwärmenden Abschnitts (35) in Bezug auf den Absorptionskoeffizienten des zu erwärmenden Abschnitts (37) erhöht wird;
- einen zweiten Schritt (E2) des Erwärmens des Hohlkörpers, in dessen Verlauf jeder zu erwärmende Abschnitt (37) und jeder überzuerwärmende Abschnitt (35) der elektromagnetischen Heizstrahlung ausgesetzt werden.

2. Verfahren nach dem vorhergehenden Anspruch, **dadurch gekennzeichnet, dass** beim ersten Markierungsschritt (E1) punktförmige Markierungen (39) in der Dicke der Wand (17) mindestens eines überzuerwärmenden Abschnitts (35) unter Ausschluss der die Wand (17) begrenzenden Flächen (21, 23) ausgeführt werden.

3. Verfahren nach einem der vorhergehenden Ansprüche, **dadurch gekennzeichnet, dass** beim zweiten Erwärmungsschritt (E2) der mindestens eine zu erwärmende Abschnitt (37) und der mindestens eine überzuerwärmende Abschnitt (35) gleichmäßig der elektromagnetischen Heizstrahlung ausgesetzt werden.

4. Verfahren nach einem der vorhergehenden Ansprüche, **dadurch gekennzeichnet, dass** die Dichte der punktförmigen Markierungen (39) auf jedem elementaren Bereich eines überzuerwärmenden Abschnitts (35) in Abhängigkeit von der Erwärmungstemperatur bestimmt wird, die nach dem zweiten Erwärmungsschritt (E2) für den elementaren Bereich zu erreichen ist.

5. Verfahren nach dem vorhergehenden Anspruch, **dadurch gekennzeichnet, dass** jede punktförmige Markierung (39) durch punktförmiges Ändern der Strahlungsundurchlässigkeit des Materials ausgeführt wird, aus dem die Wand (17) aus thermoplastischem Material des Hohlkörpers besteht.

6. Verfahren nach dem vorhergehenden Anspruch, **dadurch gekennzeichnet, dass** jede punktförmige Markierung (39) mittels eines Lasers (40) ausgeführt wird, der einen Laserstrahl (42) aussendet.

7. Verfahren nach dem vorhergehenden Anspruch, **dadurch gekennzeichnet, dass** jede punktförmige Markierung (39) durch lokales Erwärmen des Materials in der Dicke der Wand (17) mittels des Lasers (40) ausgeführt wird.

8. Verfahren nach dem vorhergehenden Anspruch, **dadurch gekennzeichnet, dass** das thermoplastische Material aus "PET" gebildet wird und dass der Laserstrahl (42) eine Wellenlänge zwischen 400 nm und 3000 nm aufweist.

9. Verfahren nach dem vorhergehenden Anspruch, **dadurch gekennzeichnet, dass** der Laserstrahl (42) eine Wellenlänge im kurzwelligen Infrarot aufweist, insbesondere 1064 nm.

10. Verfahren nach einem der Ansprüche 6 bis 9, **dadurch gekennzeichnet, dass** der Laser (40) einen Laserstrahl (42) in Impulsen zwischen 10⁻¹⁰ und 10⁻⁷ Sekunden aussendet, insbesondere in der Größenordnung von einer Nanosekunde.

11. Verfahren nach einem der Ansprüche 6 bis 10, **dadurch gekennzeichnet, dass** der Laser (40) so eingestellt wird, dass der Brennpunkt des ausgesendeten Laserstrahls (42) in einem Abstand von den die zu markierende Wand (17) begrenzenden Flächen (21, 23) eingerichtet wird, der größer als ein Schwellenwert ist, unterhalb dessen die Fläche (21, 23) der Wand beschädigt wird.

12. Verfahren nach dem vorhergehenden Anspruch, **dadurch gekennzeichnet, dass** der Brennpunkt des Laserstrahls (42) in der Dicke der zu markierenden Wand (17) angeordnet ist.

13. Verfahren nach dem Anspruch 10, **dadurch gekennzeichnet, dass** der Brennpunkt des Laserstrahls (42) außerhalb der zu markierenden Wand (17) angeordnet ist.

14. Verfahren nach einem der Ansprüche 4 bis 13, **dadurch gekennzeichnet, dass** es einen dritten Schritt (E3) der Steuerung der Markierungseinrichtungen beinhaltet, in dessen Verlauf die Temperatur mindestens eines überzuerwärmenden Abschnitts (35) bestimmt wird, sie dann mit einer Solltemperatur verglichen wird, die Dichte der punktförmigen Markierungen (39) im ersten Markierungsschritt (E1) so geändert wird, dass bei den folgenden Vorformlingen (14) eine Annäherung an die Solltemperatur erfolgt.

15. Markierter Vorformling (14), der nach dem ersten Schritt des Verfahrens nach einem der vorhergehenden Ansprüche erhalten wird, wobei der Vorformling (14) durch Formen eines einzigen thermoplastischen Materials ausgeführt wird, **dadurch gekennzeichnet, dass** die Wand (17) des Vorformlings (14) mindestens einen überzuerwärmenden Abschnitt (35) beinhaltet, der in der Dicke der Wand (17) aus thermoplastischem Material punktförmige Markierungen (39) beinhaltet, die durch lokales Undurchlässigmachen des thermoplastischen Materials gebildet werden.

16. Vorformling (14) nach dem vorhergehenden Anspruch, **dadurch gekennzeichnet, dass** die punktförmigen Markierungen (39) in mindestens einem überzuerwärmenden Abschnitt (35) nach organisierten Mustern verteilt sind.

17. Vorformling (14) nach dem vorhergehenden Anspruch, **dadurch gekennzeichnet, dass** mindestens ein überzuerwärmender Wandabschnitt (35) eine ähnliche Oberflächenbeschaffenheit wie die übrigen zu erwärmenden Wandabschnitte (37) aufweist.

18. Vorformling (14) nach einem der Ansprüche 15 bis 17, **dadurch gekennzeichnet, dass** er aus Polyethylenterephthalat ausgeführt ist.

## Claims

1. Method for preferential heating of a hollow body made of thermoplastic material, such as a container preform (14), the method comprising a step (E2) of heating the hollow body beyond a glass transition temperature by heating radiation, at least one portion (37) to be heated of the hollow body being intended to be heated to a first heating temperature while at least one other portion (35) to be superheated of the hollow body is intended to be heated beyond the first heating temperature, the portion (35) to be superheated initially having a radiation absorption coefficient substantially identical to that of the portion (37) to be heated; **characterized in that** it successively comprises:
- a first step (E1), of marking at least one portion (35) to be superheated of the hollow body, during which discrete marks (39) are made in the thickness of the wall (17) of said portion (35) to be superheated so as to increase the absorption coefficient of said portion (35) to be superheated relative to the absorption coefficient of the portion (37) to be heated;
- a second step (E2), of heating the hollow body, during which each portion (37) to be heated and each portion (35) to be superheated are exposed to the heating electromagnetic radiation.

2. Method according to the preceding claim, **characterized in that** during the marking first step (E1), discrete marks (39) are made in the thickness of the wall (17) of at least one portion (35) to be superheated, apart from the faces (21, 23) delimiting the wall (17).

3. Method according to either one of the preceding claims, **characterized in that** during the heating second step (E2), said at least one portion (37) to be heated and said at least one portion (35) to be superheated are exposed uniformly to the heating electromagnetic radiation.

4. Method according to any one of the preceding claims, **characterized in that** the density of discrete marks (39) on each elementary part of a portion (35) to be superheated is determined as a function of the heating temperature to be attained at the end of the heating second step (E2) for said elementary part.

5. Method according to the preceding claim, **characterized in that** each discrete mark (39) is made by discrete modification of the radiation opacity of the material constituting the wall (17) made of thermoplastic material of the hollow body.

6. Method according to the preceding claim, **characterized in that** each discrete mark (39) is made by means of a laser (40) that emits a laser beam (42).

7. Method according to the preceding claim, **characterized in that** each discrete mark (39) is made by local heating of the material in the thickness of the wall (17) by means of the laser (40).

8. Method according to the preceding claim, **characterized in that** the thermoplastic material is formed by "PET" and **in that** the laser beam (42) has a wavelength of between 400 nm and 3000 nm.

9. Method according to the preceding claim, **characterized in that** the laser beam (42) has a wavelength in the short infrared, in particular 1064 nm.

10. Method according to any one of Claims 6 to 9, **characterized in that** the laser (40) emits a laser beam (42) in pulses of between 10⁻¹⁰ and 10⁻⁷ seconds, in particular of the order of a nanosecond.

11. Method according to any one of Claims 6 to 10, **characterized in that** the laser (40) is adjusted so that a focal point of the emitted laser beam (42) is arranged at a distance from the faces (21, 23) delimiting the wall (17) to be marked which is greater than a determined threshold, below which the face (21, 23) of the wall is damaged.

12. Method according to the preceding claim, **characterized in that** the focal point of the laser beam (42) is located in the thickness of the wall (17) to be marked.

13. Method according to Claim 10, **characterized in that** the focal point of the laser beam (42) is located outside of the wall (17) to be marked.

14. Method according to any one of Claims 4 to 13, **characterized in that** it comprises a third step (E3) of controlling the marking means during which the temperature of at least one portion (35) to be superheated is determined, then it is compared to a setpoint temperature, with the density of the discrete marks (39) being modified in the marking first step (E1) so as to approach the setpoint temperature for the following preforms (14).

15. Marked preform (14) obtained at the end of the first step of the method carried out according to any one of the preceding claims, the preform (14) being made by molding a single thermoplastic material, **characterized in that** the wall (17) of the preform (14) comprises at least one portion (35) to be superheated comprising, in the thickness of the wall (17) made of thermoplastic material, discrete marks (39) formed by local opacification of the thermoplastic material.

16. Preform (14) according to the preceding claim, **characterized in that** the discrete marks (39) are distributed in at least one portion (35) to be superheated according to organized patterns.

17. Preform (14) according to the preceding claim, **characterized in that** at least one portion (35) of the wall to be superheated has a surface finish similar to the other wall portions (37) to be heated.

18. Preform (14) according to any one of Claims 15 to 17, **characterized in that** it is made of polyethylene terephthalate.
